# EUROPÄISCHE PATENTSCHRIFT

(11) **EP 4 453 527 B1**
(45) Veröffentlichungstag und Bekanntmachung des Hinweises auf die Patenterteilung: **19.08.2026**
(21) Anmeldenummer: 22814383.0
(22) Anmeldetag: 09.11.2022
(51) Int. Cl.: G01L 19/06

(54) **MEMBRAN ZUR VERWENDUNG MIT WASSERSTOFFHALTIGEN FLUIDEN MEDIEN UND AUFNEHMER UMFASSEND EINE SOLCHE MEMBRAN**
MEMBRANE FOR USE WITH HYDROGEN-CONTAINING FLUID MEDIA AND SENSOR COMPRISING SUCH A MEMBRANE
MEMBRANE DESTINÉE À ÊTRE UTILISÉE AVEC DES MILIEUX FLUIDES CONTENANT DE L'HYDROGÈNE ET RÉCEPTEUR COMPRENANT UNE TELLE MEMBRANE

(30) Priorität: 23.12.2021 EP 21217511
(43) Veröffentlichungstag der Anmeldung: 30.10.2024
(73) Patentinhaber: Kistler Holding AG, 8408 Winterthur (CH)
(72) Erfinder: MASTROGIACOMO, Giovanni, 8005 Zürich (CH); MÄRKI, Hans Beat, 8483 Kollbrunn (CH); CADONAU, Thomas, 9533 Kirchberg (CH)
(86) Internationale Anmeldenummer: PCT/EP2022/081288
(87) Internationale Veröffentlichungsnummer: WO 2023/117198

(56) Entgegenhaltungen:
- DE-A1- 102014 118 616
- JP-A- 2011 185 758
- JP-A- H10 132 691
- RAMANAVICIUS SIMONAS ET AL: "Insights in the Application of Stoichiometric and Non-Stoichiometric Titanium Oxides for the Design of Sensors for the Determination of Gases and VOCs (TiO2-x and TinO2n-1 vs. TiO2)", SENSORS, vol. 20, no. 23, 1 December 2020 (2020-12-01), CH, pages 6833, XP093025523, ISSN: 1424-8220, DOI: 10.3390/s20236833

## Beschreibung

### Technisches Gebiet

Die Erfindung betrifft eine Membran zur Verwendung mit wasserstoffhaltigen fluiden Medien sowie einen Aufnehmer umfassend eine solche Membran.

### Stand der Technik

Eine Membran trennt ein fluides Medium in einem ersten Raum von einem zweiten Raum ab. Im Bereich der Druckmesstechnik weisen Aufnehmer oft eine Membran auf. Die Membran trennt eine Messanordnung, beispielsweise ein Aufnehmerelement, vom fluiden Medium dessen Druck ermittelt werden soll. Ein fluides Medium ist ein gasförmiges und/oder flüssiges Medium. Eine Membran weist dabei üblicherweise eine Fläche mit einer ersten Ausdehnung und einer zweiten Ausdehnung auf, welche erste Ausdehnung und zweite Ausdehnung weitgehend senkrecht zu einer Längsachse ausgebildet sind. In einer dritten Ausdehnung parallel zur Längsachse weist die Membran eine Dicke, auch Wanddicke genannt auf.

Im Folgenden wird unter einem fluiden Medium ein wasserstoffhaltiges fluides Mediums verstanden, welches mindestens 1 Vol% (Volumenprozent) Wasserstoff aufweist.

Die Fläche der Membran weisst üblicherweise einen Bereich auf, der mit dem fluiden Medium in einem ersten Raum in Kontakt ist. Im Fall eines Druckaufnehmers wird der auf den Bereich der Membran wirkende Druck des fluiden Mediums möglichst verlustfrei an ein Druckaufnehmerelement, kurz Aufnehmerelement, weitergeleitet. Damit die Empfindlichkeit einer Messanordnung mit Aufnehmerelement, nicht zu stark von der Membran beeinträchtigt wird, muss der Bereich der Membran, der direkt dem fluiden Medium ausgesetzt ist, eine möglichst hohe Nachgiebigkeit beziehungsweise möglichst niedrige Steifigkeit aufweisen. Jedoch darf das Material in diesem Bereich mit niedriger Steifigkeit nicht irreversibel durch den Messdruck verformt werden. Werden Materialien mit einer Dehngrenze von etwa 400 MPa (Megapascal) verwendet, so muss die Membran entsprechend dick ausgefertigt sein, um nicht irreversibel verformt zu werden. Die Membran kann zudem auch dickere Bereiche aufweisen, mit denen die Membran beispielsweise mit einem Aufnehmergehäuse verbunden ist. Die dickeren Bereiche können auch der Stabilität der Membran dienen.

Die Dehngrenze eines metallischen Werkstoffs wird durch die Norm DIN EN ISO 6892-1 ermittelt. Sie entspricht dem R_{P 0,2}. Wert.

Die Fläche einer Membran kann sich weitgehend entlang der ersten Ausdehnung und der zweiten Ausdehnung erstrecken, kann aber in Richtung der Längsachse teilweise gewölbt sein.

Membranen können auch ein fluides Medium von anderen Arten von Aufnehmerelementen trennen, beispielsweise Temperaturaufnehmer, in denen ein Temperaturaufnehmerelement durch eine Membran vom fluiden Medium getrennt ist. In diesem Fall wird die Temperatur des fluiden Mediums durch die Membran an ein Temperaturaufnehmerelement weitergegeben. Auch in diesem Fall sollte die Membran möglichst dünnwandig sein, damit der Wärmedurchgangskoeffizient möglichst gross ist.

Unter Korrosion wird allgemein eine messbare Veränderung eines Werkstoffes verstanden. Korrosion kann durch Einwirkung von einer Vielzahl von Stoffen stattfinden. So ist Korrosion von metallischen Werkstoffen im Zusammenhang mit verschiedenen Laugen oder Säuren, Gasen wie Wasserstoff oder Sauerstoff, Salzwasser und vielen anderen Stoffen bekannt.

Im Folgende bezieht sich Korrosion jedoch, wenn nicht anders angegeben, auf Korrosion durch atomaren und/oder molekularen Wasserstoff.

Enthält das fluide Medium Wasserstoff, so muss die Membran gegen atomaren und/oder molekularen Wasserstoff sowohl dicht als auch beständig sein. Daher werden für Membranen, welche auch hitzebeständig über 200°C sind, oftmals handelsübliche, wasserstoffbeständige und polykristalline Metalle, wie zum Beispiel der austenitische Stahl 1.4404 (auch bekannt als 316 L) mit einer Dehngrenze von etwa 400 MPa bei Raumtemperatur oder die nickelbasierte Legierung 2.4819 (auch bekannt als C-276) mit einer Dehngrenze von ebenfalls etwa 400 MPa bei Raumtemperatur verwendet. Diese Werkstoffe charakterisieren sich jedoch durch eine mittlere Korngrösse grösser 20 µm. Grobkörnige, polykristallinen Metalle sind als Werkstoffe für dünne Membranen mit einer Dicken von weniger als 500 µm weniger geeignet, da sich auf Grund der wenigen Kristallkörner im dünnwandigen Bereich der Membranen der Werkstoff nicht isotrop verhalten könnte. Zudem ist der Diffusionsweg für molekularen und/oder atomaren Wasserstoff entlang der Korngrenzen zwischen den Kristallkörnern durch grobkörnige Bereiche relativ kurz. Dies ist nachteilig, da Wasserstoff gut auf kurzem Weg durch die Membran diffundieren könnte.

Die Bezeichnung 1.4404 wie auch andere in Folgenden genannten Werkstoffnummer entsprechen der DIN EN 10027-2.

Dringt molekularer und/oder atomarer Wasserstoff in einen metallischen Werkstoff ein, so kommt es zu sogenannter Wasserstoffversprödung. Es besteht in Folge die Gefahr eines Sprödbruchs bei Belastung des Werkstoffs.

Unter Wasserstoffversprödung wird eine Änderung der Duktilität und Festigkeit eines Metalls oder einer Metalllegierung durch das Eindringen und die anschliessende Einlagerung von Wasserstoff in der Gitterstruktur des Metalls oder der Metalllegierung verstanden. In der Folge kann es zu wasserstoffbedingter Rissbildung kommen, wodurch der Einsatz anfälliger Materialien in Anwendungen mit Wasserstoffkontakt begrenzt ist.

Bekanntermassen gilt, dass ein Metall oder eine Metalllegierung mit hoher Festigkeit eher zur Wasserstoffversprödung neigt als ein Metall mit geringerer Festigkeit.

Die Werkstoffe Stahl 1.4404 (auch bekannt als 316 L) und Legierung 2.4819 (auch bekannt als C-276) gelten allgemein als korrosionsbeständig. Sie weisen eine niedrige Dehngrenze auf und sind daher schon bei geringerer Krafteinwirkung plastisch deformierbarer als Materialien mit einer höheren Dehngrenze. Um diesen Nachteil auszugleichen werden Membranen oft in einer hohen Dicke grösser 500 µm gefertigt. Dies ist jedoch auf Grund der hohen trägen Masse einer dicken Membran nachteilig. Auch weist eine dicke Membran eine höhere Steifigkeit auf.

In einer bekannten Ausführungsform weisen Drucksensoren hinter der Membran einen Raum gefüllt mit einem fluiden Druckübertragungsmedium auf. In dieser Ausführungsform ist die Gefahr einer plastischen irreversiblen Deformation der Membran geringer, da das fluide Druckübertragungsmedium einer Deformation der Membran entgegenwirkt. Das fluide Druckübertragungsmedium, beispielsweise ein wenig kompressibles Öl, überträgt den auf die Membran wirkenden Druck an ein von der Membran beabstandetes Messelement. Die Membran muss weiterhin den Druck möglichst verlustfrei übertragen, d.h. die Membran sollte vorteilhafterweise dünn ausgestaltet sein. Beinhaltet das zu messende fluide Medium Wasserstoff, so reichert sich mit der Zeit Wasserstoff im fluiden Druckübertragungsmedium an, wodurch das Volumen zunimmt und sich in Folge die Membran nach aussen wölbt. Die Membran wird durch den durch die Membran diffundierten Wasserstoff aufgeblasen. Dies kann zum einen die Membran schädigen, zum anderen verändert es die Druckverhältnisse um das Messelement. Eine Langzeitstabilität des Sensors ist durch Diffusion des molekularen und/oder atomaren Wasserstoffs durch die Membran negativ beeinflusst.

Die Schrift US20050109114A1 beschreibt einen Aufnehmer mit einer Membran aus Legierung 2.4819 (auch bekannt als C-276). Das Material selbst gilt zwar als korrosionsbeständig, ist auf Grund der geringen Dicke der Membran jedoch nicht dicht gegenüber Wasserstoff. Die Diffusion von molekularen und/oder atomaren Wasserstoff soll vermieden werden, indem auf die Membran eine weiche Goldschicht abgeschieden ist. Die Goldschicht ist weitgehend chemisch inert und vermindert so eine Dissoziation von molekularen Bestandteilen eines fluiden Mediums, welches im Kontakt mit der Membran ist. Eine Dissoziation von molekularen Bestandteilen eines fluiden Mediums oder andere chemische Reaktionen an und mit einer Oberfläche können zur Korrosion der Oberfläche führen. Die weiche Goldschicht ist jedoch auf Grund der geringen Festigkeit von Gold nicht kratzfest und kann dementsprechend in der Anwendung verletzt werden und anschliessend nicht mehr als Diffusionssperre für Wasserstoff wirken. Das Dokument JPH10132691A offenbart eine dreischichtige Membran, bei der eine Wasserstoffpermeations-Sperrschicht aus Materialien wie Aluminium, Kupfer oder Platin sandwichartig zwischen einer Edelstahlschicht (z. B. SUS316L) und einer Nickelbasislegierung (z. B. Hastelloy) eingebettet ist. Im Artikel von RAMANAVICIUS SIMONAS ET AL: "Insights in the Application of Stoichiometric and Non-Stoichiometric Titanium Oxides for the Design of Sensors for the Determination of Gases and VOCs (TiO2-x and TinO2n-1 vs. TiO2)",SENSORS, Bd. 20, Nr. 23, 1. Dezember 2020 (2020-12-01), Seite 6833, CH ISSN: 1424-8220, DOI: 10.3390/s20236833 wird der Einsatz von nicht Stöchiometrischen Materialien in Gassensoren offenbart.

Aufgabe der Erfindung ist es eine Membran derart zu verbessern, dass die erwähnten Nachteile verringert werden. Es ist eine weitere Aufgabe der Erfindung eine verbesserte Korrosionsbeständigkeit der Membran gegenüber atomarem und/oder molekularem Wasserstoff zu erlangen.

### Darstellung der Erfindung

Die Aufgabe wird durch die Merkmale des unabhängigen Anspruchs gelöst.

Die Erfindung betrifft eine Membran zur hermetischen Trennung eines ersten Raumes mit wasserstoffhaltigem fluiden Medium von einem zweiten Raum. Die Membran weist einen metallischen Werkstoff auf. Die Membran weist eine Beschichtung zur Verringerung der Permeabilität bezüglich molekularen und/oder atomaren Wasserstoffs auf, welche Beschichtung zumindest in einem Bereich, welcher bei Verwendung im Kontakt mit dem fluiden Medium ist, zwischen dem metallischen Werkstoff der Membran und dem fluidem Medium angeordnet ist. Die Beschichtung weist Oxide, Carbide oder Nitride auf, beispielsweise Aluminiumoxide, Aluminiumcarbide, Aluminiumnitride, Chromoxide, Chromnitride, Siliziumoxide, Siliziumcarbide, Siliziumnitride, Titanoxide, Titancarbide, Titannitride, Zirkoniumoxide, Carbide oder Nitride seltener Erden oder Oxide seltener Erden.

Erfindungsgemäss weist die Beschichtung mindestens ein nicht-stöchiometrisches Oxid, Carbid oder Nitrid auf.

Bevorzugt weist die Beschichtung ein nicht-stöchiometrisches Gemisch auf.

Die Membran ist beispielsweise eine Membran für einen Aufnehmer zur Ermittlung eines Drucks des fluiden Mediums.

Ein metallischer Werkstoff ist bevorzugt eine Legierung aus chemischen Elementen umfassend mindestens ein Metall und mindestens ein weiteres chemisches Element.

Die Membran ist bestimmt zur Trennung eines Raums mit wasserstoffhaltigem fluiden Medium von einem weiteren Raum. Ein wasserstoffhaltiges fluides Medium weist mindestens 1 Vol% Wasserstoff auf und wird im Folgenden auch als korrosiv oder korrosives fluides Medium bezeichnet.

Der metallische Werkstoff der Membran ist aus einem Metall oder einer Metalllegierung ausgeführt. Ein Metall oder eine Metalllegierung sind beispielsweise Nickel basierte Legierungen wie galvanisch geformtes Nickel, Nickel 270, Nickel 301, K-Monel, oder Titan basierte Legierungen, wie pures Titan, Ti-6Al-4V, Ti-5Al-2.5Sn, Ti-11.5Mo-6Zr-4.5Sn, Alpha-2 TiAl Legierung, Gamma-TiAl Legierung, oder Kupfer basierte Legierungen, wie OFHC-Kupfer, Aluminum Bronze, Be-Cu Legierungen, GRCop-84 (Cu-8Cr-4Nb), NARloy-Z (Cu-3Ag-0.5Zr), 70-30 Brass, oder Aluminium basierte Legierungen, wie 1100-T0, 2011, 2024, 5086, 6061-T6, 6063, 7039, 7075-T73, oder austenitische Stähle, wie CG-27, Tenelon, A302B, A286, 216, 304L, 304N, 304LN, 305, 308L, 309S, 310, 316, 321, 347, 18-2-12 (Nitronic 32), 21-6-9 (Nitronic 40), 22-13-5 (Nitronic 50), 18-18 Plus, 18-2-Mn, 18-3-Mn, oder Ferritische Stähle, wie A106-Gr. B, A212-61T, A372, A515-Gr. 70, A516, ,A517-F (T-1), A533B, HY-80, HY-100, Iron (armco), X42, X52, X60, X65, X70, X100, 430F, 1020, 1080, C1025, 1042, 4140, 4340, oder martensitische Stähle wie AerMet 100, D6AC, H-11, Fe-9Ni-4Co-0.20C, 410, 440A, 440C, 17-4 PH, 18Ni-250, oder nickelbasierte Superlegierungen (Superalloys), wie AF-115, AF-56, Astroloy, CM SX-2, CM SX-3, CM SX-4C, CM SX-4D, CM-SX5, Hastelloy, Haynes 230, Haynes 242, IN 100, Inconel 625, Inconel 700, Inconel 706, Inconel 713LC, Inconel 718, Inconel X-750, Inco 4005, MAR-M200, MAR-M246, MA 6000, MA 754, MERL 76, NASA-HR1, PWA 1480, PWA 1480E, Rene 41, Rene N-4, Rene 95, RR 2000, Udimet 720, Udimet 700, Waspaloy, oder eisenbasierte Superlegierungen, wie A286, Incoloy 802, Incoloy 901, Incoloy 903, Incoloy 907, Incoloy 909, JBK-75, MA 956, Ni-SPAN-C, oder kobaltbasierte Superlegierungen , wie Haynes 188, MP35N, MP159, MP98T, X-45. Diese Legierungen sind in J. A. Lee, Hydrogen Embrittlement, NASA/TM-2016-218602, Alabama, US (2016), Tabellen 2, 3 und 4 näher beschrieben. Die Legierungen sind prinzipiell geeignet als metallischer Werkstoff zur Herstellung einer Membran, wobei je nach Materialeigenschaften unterschiedliche Dimensionen der Membran gewählt werden. Jedoch sind einige Legierungen nur bedingt geeignet für die direkte Exposition mit einem wasserstoffhaltigen fluiden Medium. Durch die Beschichtung des metallischen Werkstoffs erhält der Fachmann die Möglichkeit, den metallischen Werkstoff der Membran nach geeigneten physikalischen Eigenschaften wie Steifigkeit, Wärmeleitfähigkeit, Wärmeausdehnungskoeffizient oder Dehngrenze auszuwählen. Die Beschichtung schützt den metallischen Werkstoff gegenüber wasserstoffbedingter Korrosion. Eine Wasserstoffbeständigkeit des metallischen Werkstoffs ist vorteilhaft, aber nicht notwendig.

Einige der vorgenannten metallischen Werkstoffe weisen grobkörnige, polykristalline Gefüge auf, welche als Werkstoffe für dünne Membranen mit einer Dicken von weniger als 500 µm, wie eingangs beschrieben, im direkten Kontakt mit einem wasserstoffhaltigen fluiden Medium weniger geeignet sind. Eine Beschichtung der Membran hebt jedoch diesen Nachteil auf und gewährt damit eine relativ grosse Auswahl an Werkstoffen zur Verwendung als metallischer Werkstoff der Membran.

Bevorzugt weist die Membran zumindest teilweise eine Dicke kleiner 500 µm auf. Dies ist vorteilhaft, um einen Druck eines fluiden Mediums vom ersten Raum an eine Messanordnung im zweiten Raum möglichst verlustfrei zu übermitteln. Auch weist eine Membran mit einer Dicke kleiner 500 µm eine niedrigere Massenträgheit auf als Membranen mit einer höheren Dicke. Dies ist vorteilhaft, da bei Beschleunigung des Aufnehmers nur geringe Kräfte durch die träge Masse der Membran auf die Messanordnung ausgeübt werden und eine Beschleunigung daher nicht oder nur geringfügig eine Druckmessung beeinflusst.

Besonders bevorzugt ist der metallische Werkstoff ein feinkörniger Stahl mit einem Gefüge aus Martensit, Bainit, Nadelferrit, Widmannstätten-Ferrit oder ein Gemisch dieser Gefüge. Diese werden allgemein nicht als Wasserstoffbeständig angesehen, weisen jedoch erstaunlicherweise auf Grund ihres relativ feinkörnigen Gefüges eine geringe Neigung zur Wasserstoffversprödung auf. Feinkörnigkeit führt zu längeren Diffusionswegen, weshalb Wasserstoff nicht auf kurzen Weg durch diese Materialien diffundieren kann. Der metallische Werkstoff weist daher eine gewisse Wasserstoffbeständigkeit auf. Bainit, Nadelferrit und Widmannstätten-Ferrit sind auch als Zwischenstufengefüge bekannt. Zwischenstufengefüge umfassen Gefüge zwischen Martensit und Perlit. Unter Nadelferrit werden die im englischen mit Acicular Ferrite bezeichneten Materialien verstanden.

Die Gefüge aus Martensit, Bainit, Widmannstätten-Ferrit, Nadelferrit oder einem Gemisch dieser Gefüge zeichnen sich durch einen mittleren Korndurchmesser von kleiner 20 µm aus und sind daher für die Herstellung von dünnwandigen Membranen mit Dicken von kleiner 500 µm besonders geeignet. Das Bauteil hat durch den kleinen mittleren Korndurchmesser isotrope physikalische Eigenschaften, was bei Verwendung der Membran vorteilhaft ist.

Besonders bevorzugt weist das Gefüge einen Martensit mit teilkohärenten oder inkohärenten Ausscheidungen, bevorzugt an Korngrenzen innerhalb des Werkstoffes auf, wie in Metallkunde, E. Hornbogen und H. Warlimont, 4. Auflage, Springer Verlag 2001, beschrieben. Auf. Teilkohärenten oder inkohärente Ausscheidungen im Sinne dieser Beschreibung sind in Werkstoffkunde - Stahl - Band 1, Verein Deutscher Eisenhüttenleute (Herausgeber), Springer Verlag 1984 oder in Pirlog, Madalina, and P. K. Pranzas. "CHARACTERIZATION OF COPPER PRECIPITATES IN FE-CU ALLOYS WITH SMALL-ANGLE NEUTRON SCATTERING" beschrieben.

Inkohärente und teilkohärente Ausscheidungen wirken als Wasserstoffsenken. An Wasserstoffsenken lagert sich Wasserstoff an. Dadurch wird verhindert, dass der angelagerte Wasserstoff weiter in den Werkstoff eindringen kann. Die Mobilität des Wasserstoffs ist verringert gegenüber einem Werkstoff mit kohärenten Ausscheidungen, da sich kohärente Ausscheidungen innerhalb eines Korns befinden, Wasserstoff aber bevorzugt entlang von Korngrenzen im Werkstoff mobil ist.

Die Beschichtung ist ein Teil der Membran. Der metallische Werkstoff der Membran weist erfindungsgemäss die Beschichtung auf. Die Beschichtung ist auf der dem fluiden Medium zugewandten Seite des metallischen Werkstoffs der Membran angeordnet.

Erfindungsgemäss weist die Membran eine Beschichtung auf. Aufgabe der Beschichtung ist es, die Permeabilität der Membran bezüglich atomarer oder molekularer Bestandteile des fluiden Mediums, insbesondere molekularen und/oder atomaren Wasserstoffs, zu verringern. Die Beschichtung ist zumindest im Bereich, welcher bei Verwendung im Kontakt mit dem fluiden Medium ist, zwischen dem metallischen Werkstoff der Membran und dem fluiden Medium angeordnet. Die Beschichtung weist Oxide, Carbide oder Nitride auf. Oxide, Carbide oder Nitride sind beispielsweise Aluminiumoxide, Aluminiumcarbide, Aluminiumnitride Chromoxide, Chromnitride, Siliziumoxide, Siliziumcarbide, Siliziumnitride, Titanoxide, Titancarbide, Titannitride, Zirkoniumoxide, oder Oxide seltener Erden. Die Beschichtung verhindert einen direkten Kontakt des metallischen Werkstoffes der Membran mit dem fluiden Medium. Eine direkte Adsorption von molekularen und/oder atomaren Bestandteilen des fluiden Mediums am metallischen Werkstoff der Membran wird durch die Beschichtung verhindert. Da genannte Oxide, Nitride und Carbide weitgehend chemisch inert im Vergleich zu eingangs genannten Stählen, Legierungen und metallischen Werkstoffen sind, vermindert die Beschichtung des metallischen Werkstoffs eine chemische Reaktion oder Dissoziation von Bestandteilen an der Oberfläche der derart beschichteten Membran. Die Korrosionsbeständigkeit der Membran ist weiter erhöht gegenüber einer Membran ohne Beschichtung.

Die Beschichtung ist dünner als die Dicke des metallischen Werkstoffes. Bevorzugt beträgt die Dicke der Beschichtung maximal 10% der gesamten Dicke der Membran. Übliche Schichtdicken betragen zwischen 1 µm und 5 µm. Die Steifigkeit und Dehngrenze der Membran ist so hauptsächlich durch den metallischen Werkstoff bestimmt.

Üblicherweise weist der metallische Werkstoff einen Wärmeausdehnungskoeffizient zwischen 5·10⁻⁶ K⁻¹ und 15·10⁻⁶ K⁻¹ im Temperaturbereich zwischen 20°C und 100°C auf. Bis zu einem gewissen Grad kompensieren epitaktische Effekte Fehlanpassung zwischen metallischem Werkstoff und Beschichtung. Die Haftung der Beschichtung am metallischen Werkstoff wird durch epitaktische Effekte begünstigt, wenn die Schicht mit epitaktischen Verfahren aufgebracht wird.

Die Beschichtung weist ebenfalls einen Wärmeausdehnungskoeffizienten auf. Bevorzugt weicht der Wärmeausdehnungskoeffizient der Beschichtung um nicht mehr als 50% vom Wärmeausdehnungskoeffizienten des metallischen Werkstoffes ab. Dies verhindert eine Delamination und Rissbildung in der Beschichtung bei thermischer Beanspruchung.

Eine thermische Beanspruchung oder Änderung der Temperatur besteht bei einem Anstieg oder einem Abfall der Temperatur mindestens eines Bereichs der Membran um mehr als 10°C bezüglich einer Temperatur zu einem beliebigen vorherigen Zeitpunkt. Die Zeitspanne ist beliebig und kann bis zu Tagen betragen.

Vorteilhafterweise weist die Membran eine Haftvermittlerschicht auf. Aufgabe der Haftvermittlerschicht ist es, eine Delamination der Beschichtung vom metallischen Werkstoff zu verhindern. Bei Temperaturänderung auftretende mechanische Spannungen teilen sich so vorteilhafterweise auf eine Grenzfläche zwischen metallischen Werkstoff und Haftvermittlerschicht und einer weiteren Grenzfläche zwischen Haftvermittlerschicht und Beschichtung auf. Dadurch sind lokale mechanische Spannungen geringer und eine Rissbildung bei mechanischer oder thermischer Beanspruchung wird verhindert. Die Haftvermittlerschicht ist vorteilhafterweise ein Metall mit einer hohen Sauerstoffaffinität, beispielsweise ein Refraktärmetall, Aluminium oder Metalle der Seltenen Erden. Refraktärmetalle sind Titan, Vanadium, Chrom, Zirkonium, Niob, Hafnium, Tantal, Molybdän, oder Wolfram. Die Haftvermittlerschicht weist dabei eine Reinheit von mindestens 75 Gew% auf. Eine Reinheit von mindestens 75 Gew% bedeutet, dass 75 Gew% der Haftvermittlerschicht aus einem Metall besteht.

Bevorzugt besteht die Haftvermittlerschicht zumindest zu 90 Gew% aus Zirkonium oder Wolfram. Zirkonium oder Wolfram ist einfach als Schicht aufbringbar.

In der erfindungsgemässen Ausführungsform weist die Membran eine Beschichtung aus einem nicht-stöchiometrischem Oxid oder einem nicht-stöchiometrischem Nitrid oder einem nicht-stöchiometrischem Carbid auf.

Nicht-stöchiometrisch ist ein Oxid oder ein Nitrid oder ein Carbid, wenn die chemischen Elemente nicht in dem für das jeweilige Gemisch optimalen Verhältnis vorkommen. Das optimale Verhältnis ist bei stöchiometrischen Oxiden, Nitriden oder Carbiden üblicherweise die stabilste chemische Verbindung.

Stöchiometrische Carbide sind beispielsweise SiC (Siliziumcarbid), Al₄C₃ (Aluminiumcarbid), oder TiC (Titancarbid).

Ein nicht-stöchiometrisches Carbid ist ein Gemisch (1-y)M-yMCₓ (mit 0 < x < x_{M,C} und 0 < y <= 1, mit M=Si mit x_{Si,C}=1, oder M=Al mit x_{Al,C}=3/4, oder Ti mit x_{Ti,C}=1). Die Konstante x_{M,C} ist vom Element M abhängig für Carbide C. Bei x_{M,C} ist das stöchiometrische Verhältnis für das jeweilige Element M in Verbindung mit Kohlenstoff C erreicht. Es sind auch andere Elemente für M verwendbar. Das stöchiometrische Verhältnis des Carbids kann in der Fachliteratur ermittelt werden.

Stöchiometrische Nitride sind beispielsweise AlN (Aluminiumnitrid), CrN (Chromnitrid), Si₃N₄ (Siliziumnitrid), TiN (Titannitrid).

Ein nicht-stöchiometrisches Nitrid ist ein Gemisch (1-y)M-yMNₓ (mit 0 < x < x_{M,N} und 0 < y <= 1, mit M=Al mit x_{Al,N}=1, oder M=Cr mit X_{Cr,N}=1, oder M=Si mit x_{Si,N}=4/3, oder M=Ti mit x_{Ti,N}=1). Die Konstante x_{M,N} ist vom Element M abhängig für Nitride N. Bei x_{M,N} ist das stöchiometrische Verhältnis für das jeweilige Element M in Verbindung mit Stickstoff N erreicht. Es sind auch andere Elemente für M verwendbar. Das stöchiometrische Verhältnis des Nitrids kann in der Fachliteratur ermittelt werden.

Ein stöchiometrisches Oxid ist beispielsweise Al₂O₃ (Aluminiumoxid), SiO2 (Siliziumoxid), TiO₂ (Titanoxid), ZrO₂ (Zirkoniumoxid), Cr₂O₃ (Chromoxid), oder, bei einem Oxid der seltenen Erden Sc₂O₃, Y₂O₃, La₂O₃, CeO₂, Pr₂O₃, Nd₂O₃, Pm₂O₃, Sm₂O₃, EuO, Gd₂O₃, Tb₂O₃, Dy₂O₃, Ho₂O₃, Er₂O₃, Tm₂O₃, Yb₂O₃, Lu₂O₃.

Seltene Erden sind Sc (Scandium), Y (Yttrium), La (Lanthan), Ce (Cer), Pr (Praseodym), Nd (Neodym), Pm (Promethium), Sm (Samarium), Eu (Europium), Gd (Gadolinium), Tb (Terbium), Dy (Dysprosium), Ho (Holmium), Er (Erbium), Tm (Thulium), Yb (Ytterbium), Lu (Lutetium).

Ein nicht-stöchiometrisches Oxid ist ein Gemisch (1-y)M-yMOₓ (mit 0 < x < x_{M,O} und 0 < y <= 1; mit M=Al mit x_{Al,O}=1.5, oder M=Cr mit x_{Cr,O}=1.5, oder M=Si mit x_{Si,O}=2, oder M=Ti mit x_{Ti,O}=2, oder M=Zr mit x_{Zr,O}=2, oder M=seltene Erden mit X_{Seltene Erden,O}=1 bis 2). Die Konstante x_{M,O} ist vom Element M abhängig für Oxide O. Bei x_{M,O} ist das stöchiometrische Verhältnis für das jeweilige Element M in Verbindung mit Sauerstoff O erreicht. Es sind auch andere Elemente für M verwendbar. Das stöchiometrische Verhältnis des Oxids kann für andere Elemente M in der Fachliteratur ermittelt werden.

Die Beschichtung aus einem nicht-stöchiometrischem Oxid oder einem nicht-stöchiometrischem Nitrid oder einem nicht-stöchiometrischem Carbid ist vorteilhaft, da der Wärmeausdehnungskoeffizient von nicht-stöchiometrischen Oxiden, Nitriden oder Carbiden einstellbar ist. Bevorzugt weicht der Wärmeausdehnungskoeffizient der Beschichtung um nicht mehr als 50% vom Wärmeausdehnungskoeffizienten des metallischen Werkstoffes ab. Dies verhindert eine Delamination und Rissbildung in der Beschichtung bei thermischer Beanspruchung. Eine Haftvermittlerschicht kann in dieser Ausführungsform entfallen.

Das Wort "oder" bezüglich Carbide, Nitride und Oxide ist nicht als exklusives "oder" zu verstehen. So kann eine Beschichtung, welche ein Carbid aufweist auch ein Nitrid aufweisen. Sogenannte Carbonitride sind ausdrücklich sowohl in einer Beschichtung aufweisend Carbide als auch in einer Beschichtung aufweisend Nitride mit offenbart. Beispiele sind Gemische aus Titancarbid und Titannitrid (Titancarbonitride), Zirkoncarbid und Zirkonnitrid (Zirkoncarbonitride), oder Chromcarbid und Chromnitrid (Chromcarbonitride). Im Gegensatz zu ebenfalls weitgehend chemisch inertem Gold mit einer Vickershärte unter 100 HV 10 weisen die beispielshaft angegebenen Oxide, Nitride und Carbide eine Vickershärte über 100 HV auf. Die Beschichtung des metallischen Werkstoffs weist daher eine erhöhte mechanische Beständigkeit auf im Vergleich zu einer, aus dem Stand der Technik bekannten, Beschichtung aus Gold.

Unter Vickershärte wird die Vickershärte mit einer Prüfkraft von 10 Kilopond bzw. 10 kgf (Kilogram-force), die sogenannte HV 10, verstanden. Die Prüfung der Vickershärte ist in Norm DIN EN ISO 6507-1:2018 bis -4:2018 beschrieben.

Bevorzugt weist die Beschichtung nicht-stöchiometrische Aluminiumoxide oder nicht-stöchiometrische Titancarbide auf. Aluminiumoxid ist in der Industrie als chemisch inerter Werkstoff bekannt. Zudem ist Aluminiumoxid gegenüber seltenen Erden oder Zirkonium vergleichsweise günstig. Auch Titancarbide finden industriell weite Verbreitung und ist als günstiger, weitgehend chemisch inerter Werkstoff bekannt. Im Gegensatz zu ebenfalls weitgehend chemisch inertem Gold mit einer Vickershärte unter 100 HV 10 weist Aluminiumoxid eine Vickershärte über 1500 HV 10 auf und damit als Beschichtung eines metallischen Werkstoffs eine erhöhte mechanische Beständigkeit im Vergleich zu einer Beschichtung aus Gold. Titancarbid weist eine Vickershärte über 2500 HV 10 auf und weist damit als Beschichtung eines metallischen Werkstoffs eine erhöhte mechanische Beständigkeit auf im Vergleich zu einer Beschichtung aus Gold.

In einer bevorzugten Ausführungsform weist die Membran eine Beschichtung aus nicht-stöchiometrischem Aluminiumoxid (1-y)Al-yAlOₓ (mit 0 < x < 1.5 und 0 < y <= 1) auf. Vorteilhaft ist, dass der Wärmeausdehnungskoeffizient von nicht-stöchiometrischen Aluminiumoxid einstellbar ist. Bevorzugt weicht der Wärmeausdehnungskoeffizient der Beschichtung um nicht mehr als 50% vom Wärmeausdehnungskoeffizienten des metallischen Werkstoffes ab. Dies verhindert eine Delamination und Rissbildung in der Beschichtung bei thermischer Beanspruchung. Eine Haftvermittlerschicht kann in dieser Ausführungsform entfallen.

In einer Ausführungsform weist die Membran eine Beschichtung aus nicht-stöchiometrischem Carbid (1-y)M-yMCₓ (mit 0 < x < x_{M,C} und 0 < y <= 1) mit einem Gradienten innerhalb der Beschichtung oder eine Beschichtung aus nicht-stöchiometrischem Nitrid (1-y)M-yMNₓ (mit 0 < x < x_{M,N} und 0 < y <= 1) mit einem Gradienten innerhalb der Beschichtung oder eine Beschichtung aus nicht-stöchiometrischem Oxid (1-y)M-yMOₓ (mit 0 < x < x_{M,O} und 0 < y <= 1) mit einem Gradienten innerhalb der Beschichtung auf. Die Konstanten x_{M,C}, x_{M,N}, x_{M,O} sind, wie bereits beschrieben, vom Element M abhängig für Carbide C, Nitride N und Oxide O und entsprechen dem stöchiometrische Verhältnis für das jeweilige Element M in Verbindung mit Kohlenstoff C, Stickstoff N oder Sauerstoff O. Der Anteil y nimmt innerhalb der Beschichtung mit zunehmenden Abstand vom metallischen Werkstoff graduell zu. Alternativ nimmt der Anteil x innerhalb der Beschichtung mit zunehmenden Abstand vom metallischen Werkstoff graduell zu. Es kann auch Anteil x und der Anteil y innerhalb der Beschichtung mit zunehmenden Abstand vom metallischen Werkstoff graduell zunehmen. Dies hat den Vorteil, dass die Beschichtung an der Grenzfläche zwischen Beschichtung und metallischem Werkstoff durch die Auswahl der Anteile x und y gezielt an den metallischen Werkstoff anpassbar ist. Eine Anpassung kann Verspannungen an der Grenzfläche minimieren und/oder ein angepasster Wärmeausdehnungskoeffizienten sein. Der Gradient innerhalb der Beschichtung ist vorteilhaft, da sich physikalische Eigenschaften innerhalb der Beschichtung ebenso graduell ändern. Verspannungen oder Rissbildung in der Beschichtung werden so vermieden. An der Fläche im Kontakt mit dem fluiden Medium können die Eigenschaften auf das fluide Medium abgestimmt sein. So kann die Beschichtung auch neben Wasserstoff anderen Stoffen im fluiden Medium ausgesetzt sein, und durch die Auswahl der Anteile x und y eine höhere Resistenz gegen andere Stoffe aufweisen, beispielsweise laugen- oder säurehaltige Gase oder Flüssigkeiten.

Vorteilhafterweise weicht der Wärmeausdehnungskoeffizient der Beschichtung aus nicht-stöchiometrischem Oxid (1-y)M-yMOₓ, nicht-stöchiometrischem Nitrid (1-y)M-yMNₓ, oder nicht-stöchiometrischem Carbid (1-y)M-yMCₓ mit Gradienten innerhalb der Beschichtung an der Grenzfläche zwischen metallischem Werkstoff und Beschichtung um nicht mehr als 50% vom Wärmeausdehnungskoeffizienten des metallischen Werkstoffes ab.

Besonders bevorzugt weist die Beschichtung aus nicht-stöchiometrischem Aluminiumoxid (1-y)Al-yAlOₓ (mit 0 < x < 1.5 und 0 < y <= 1) einen Gradienten innerhalb der Beschichtung auf. Der Anteil y nimmt innerhalb der Beschichtung mit zunehmenden Abstand vom metallischen Werkstoff graduell zu. Alternativ nimmt der Anteil x innerhalb der Beschichtung mit zunehmenden Abstand vom metallischen Werkstoff graduell zu. Es kann auch Anteil x und der Anteil y innerhalb der Beschichtung mit zunehmenden Abstand vom metallischen Werkstoff graduell zunehmen. Der Wärmeausdehnungskoeffizient der Beschichtung an der Grenzfläche zwischen metallischem Werkstoff und Beschichtung weicht um nicht mehr als 50% vom Wärmeausdehnungskoeffizienten des metallischen Werkstoffes ab.

In einer Ausführungsform der Membran mit Beschichtung aus nicht-stöchiometrischem Oxid (1-y)M-yMOₓ (mit 0 < x < x_{M,O} und 0 < y <= 1) oder aus nicht-stöchiometrischem Nitrid (1-y)M-yMNₓ (mit 0 < x < x_{M,N} und 0 < y <= 1) oder aus nicht-stöchiometrischem Carbid (1-y)M-yMCₓ (mit 0 < x < x_{M,C} und 0 < y <= 1) sowohl mit als auch ohne Gradienten innerhalb der Beschichtung weist die Membran mindestes eine weitere Beschichtung auf. Die weitere Beschichtung ist auf der dem metallischen Werkstoff abgewandten Seite der Beschichtung angeordnet. Die weitere Beschichtung weist stöchiometrisches Oxid oder stöchiometrisches Carbid oder stöchiometrisches Nitrid auf. Der Wärmeausdehnungskoeffizient der Beschichtung liegt vorteilhaft zwischen dem Wärmeausdehnungskoeffizienten des metallischen Werkstoffs und dem Wärmeausdehnungskoeffizienten der weiteren Beschichtung. Die Beschichtung übernimmt dabei teilweise die Aufgabe der Haftvermittlerschicht, behält aber ihre Aufgabe bei die Permeabilität der Membran bezüglich molekularen und/oder atomaren Wasserstoffs zu verringern. Die Permeabilität der Membran bezüglich molekularen und/oder atomaren Wasserstoffs wird weiter durch die weitere Beschichtung verringert. So weist stöchiometrisches Oxid oder stöchiometrisches Nitrid oder stöchiometrisches Carbid eine erhöhte chemische Resistenz auf, im Vergleich zu nicht-stöchiometrischen Oxid oder nicht-stöchiometrischen Nitrid oder nicht-stöchiometrischen Carbid; sie sind besonders chemisch inert. Der Gradient innerhalb der Beschichtung ist vorteilhaft, da sich physikalische Eigenschaften innerhalb der Beschichtung ebenso graduell ändern. Verspannungen oder Rissbildung in der Beschichtung werden so vermieden. An der Fläche im Kontakt mit der weiteren Beschichtung können die Anteile x und y derart gewählt sein, dass Verspannungen, auch bei thermischer Belastung, minimal sind. Die weitere Beschichtung weist eine stöchiometrische Zusammensetzung auf, die chemisch besonders inert ist.

Zusätzlich kann eine bereits beschriebene Haftvermittlerschicht zwischen Beschichtung und metallischem Werkstoff vorgesehen werden.

In einer Sonderform der Membran mit einer Beschichtung aus nicht-stöchiometrischem Oxid, Nitrid oder Carbid mit einem Gradienten geht die Beschichtung in einem Abstand von der Grenzfläche zwischen Beschichtung und metallischen Werkstoff in ein stöchiometrisches Oxid, Nitrid oder Carbid über.

In einer alternativen Sonderform der Membran mit einer Beschichtung aus nicht-stöchiometrischem Oxid, Nitrid oder Carbid mit einem Gradienten geht die Beschichtung in einem Abstand von der Grenzfläche zwischen Beschichtung und metallischen Werkstoff in das jeweilige stöchiometrische Oxid, Nitrid oder Carbid über.

In einer weiteren Ausführungsform ist eine stöchiometrische weitere Beschichtung auf einer nicht-stöchiometrische Beschichtung aufgebracht. Der Wärmeausdehnungskoeffizient der Beschichtung liegt dann vorteilhafterweise zwischen dem Wärmeausdehnungskoeffizienten des metallischen Werkstoffs und dem Wärmeausdehnungskoeffizienten der weiteren Beschichtung.

In einer weiteren Ausführungsform weist die Membran mindestens eine weitere Beschichtung auf, wobei eine erste weitere Beschichtung auf der dem fluiden Medium zugewandten Seite der Beschichtung angeordnet ist und jede zusätzliche weitere Beschichtung jeweils auf der dem fluiden Medium zugewandten Seite der vorherigen weiteren Beschichtung. Die mindestens eine weitere Beschichtung weist ein nicht-stöchiometrisches Carbid, Nitrid oder Oxid auf, analog zur bereits beschriebenen Beschichtung. Jedoch weist die weitere Beschichtung eine andere chemische Zusammensetzung auf als die Beschichtung. Ist beispielsweise die Beschichtung ein Titanoxid, Titannitrid oder, Titancarbid, so kann die weitere Beschichtung ein Aluminiumnitrid, Aluminiumoxid oder Aluminiumcarbid sein. Entsprechend ist die chemische Zusammensetzung von benachbarten weiteren Beschichtungen unterschiedlich. Dies hat den Vorteil, dass die weitere Beschichtung im Kontakt mit dem fluiden Medium auf das fluide Medium angepasst sein kann, beispielsweise auf eine Resistenz gegenüber weiteren, im fluiden Medium enthaltenen Stoffen. Die Beschichtung kann weiterhin auf den metallischen Werkstoff abgestimmt sein.

In einer besonderen Ausführungsform der Membran mit Beschichtung aus nicht-stöchiometrischem Aluminiumoxid (1-y)Al-yAlOₓ (mit 0 < x < 1.5 und 0 < y <= 1) sowohl mit oder ohne Gradienten innerhalb der Beschichtung, weist die Membran mindestens eine weitere Beschichtung auf. Die weitere Beschichtung ist auf der dem metallischen Werkstoff abgewandten Seite der Beschichtung angeordnet. Die zusätzliche weitere Beschichtung weist stöchiometrisches Aluminiumoxid Al₂O₃ auf. Der Wärmeausdehnungskoeffizient der Beschichtung liegt zwischen dem Wärmeausdehnungskoeffizienten des metallischen Werkstoffs und dem Wärmeausdehnungskoeffizienten der weiteren Beschichtung. Die Beschichtung übernimmt dabei teilweise die Aufgabe der Haftvermittlerschicht, behält aber ihre Aufgabe bei die Permeabilität der Membran bezüglich molekularen und/oder atomaren Wasserstoffs zu verringern. Die Permeabilität der Membran bezüglich molekularen und/oder atomaren Wasserstoffs wird weiter durch die weitere Beschichtung verringert.

In einer Sonderform der Membran mit einer Beschichtung aus nicht-stöchiometrischem Aluminiumoxid (1-y)Al-yAlOx (mit 0 < x < 1.5 und 0 < y <= 1) mit einem Gradienten geht die Beschichtung in einem Abstand von der Grenzfläche zwischen Beschichtung und metallischen Werkstoff in stöchiometrisches Al₂O₃ über.

In einer Ausführungsform weist die Membran eine innere Beschichtung zur Verringerung der Permeabilität bezüglich molekularen und/oder atomaren Wasserstoffs auf. Die innere Beschichtung ist auf der dem fluiden Medium abgewandten Seite des metallischen Werkstoffs der Membran im zweiten Raum angeordnet. Die innere Beschichtung weist in dieser Ausführungsform ein nicht-stöchiometrisches Oxid oder Nitrid oder Carbid auf. Es sind die gleichen Oxide, Carbide oder Nitride vorteilhaft, die schon Bezüglich der Beschichtung beschrieben sind. So kann die Aufbringung gleich der Beschichtung erfolgen. Die innere Beschichtung ist insbesondere dann vorteilhaft, wenn es sich beim zweiten Raum, welchen die Membran vom ersten Raum mit fluidem Medium trennt, um ein abgeschlossenes Volumen handelt. Ein abgeschlossenes Volumen kann beispielsweise das Innere eines Gehäuses eines Aufnehmers sein. Durch die zusätzliche innere Beschichtung wird die Diffusion von molekularem oder atomarem Wasserstoff durch die Membran weiter verringert, wodurch im zweiten Raum weniger Wasserstoff angereichert wird. Ist im abgeschlossenen Volumen ein Druckübertragungsmedium angeordnet so werden eingangs beschriebene negative Effekte wie ein Aufblasen der Membran vermieden.

Es ist möglich, dass in einer Ausführungsform innere Beschichtung und Beschichtung nicht identische chemische Zusammensetzungen aufweisen. Da die Beschichtung mit dem fluiden Medium in Kontakt ist, die innere Beschichtung jedoch nicht, können so unterschiedliche Beschichtungen gewählt werden. So kann beispielsweise innere Beschichtung oder Beschichtung elektrisch isolierend ausgeführt sein. Auch kann die Beschichtung eine Beständigkeit gegenüber anderen Stoffen aufweisen, welche die innere Beschichtung nicht aufweisen muss.

Analog zur Beschichtung kann auch optional zwischen innerer Beschichtung und metallischem Werkstoff der Membran eine Haftvermittlerschicht angeordnet sein.

Die Erfindung umfasst auch einen Aufnehmer zur Ermittlung eines Drucks eines fluiden Mediums. Der Aufnehmer weist ein dem fluiden Medium zugewandtes druckseitiges Ende auf. Der Aufnehmer weist ein Gehäuse auf. Der Aufnehmer weist eine Messanordnung auf. Die Messanordnung ist innerhalb des Gehäuses angeordnet. Der Aufnehmer weist eine Membran in einer der oben beschriebenen Ausführungsformen auf. Der zweite Raum entspricht dabei einem Volumen im inneren des Gehäuses.

Eine Messanordnung zur Ermittlung eines Drucks eines fluiden Mediums ist beispielsweise mindestens ein piezoelektrischer Kristall, welcher in Abhängigkeit eines an der Membran anliegenden Druckes piezoelektrische Ladungen generiert. Der piezoelektrische Kristall ist in einer Ausführungsform in einer Vorspannhülse angeordnet, welche eine Vorspannung auf den piezoelektrischen Kristall ausübt. So sind sowohl negative als auch positive Druckänderungen erfassbar. Eine Messanordnung kann alternativ auch kapazitive Messelemente enthalten, welche eine mechanische Verformung als Änderung einer Kapazität erfassen.

Eine Messanordnung kann alternativ auch piezoresistive Messelemente oder Dehnmessstreifen, auch als Dehnungsmesstreifen oder DMS bezeichnet, aufweisen, welche eine mechanische Verformung als Änderung eines elektrischen Widerstands erfassen. Dem Fachmann sind weitere Messanordnungen bekannt, welche in Aufnehmern zur Ermittlung eines Drucks eines fluiden Mediums verwendet werden.

Die Membran ist am druckseitigen Ende des Gehäuses angeordnet und trennt die Messanordnung hermetisch vom fluiden Medium. Das Gehäuse und die Membran sind mit einer stoffschlüssigen Verbindungen verbunden. Eine stoffschlüssige Verbindung ist beispielsweise eine Schweissverbindung oder eine Lötverbindung. Auch eine stoffschlüssige Verbindung mit einem Klebstoff ist denkbar.

Die Membran weist einen ersten Bereich auf, welcher bei Verwendung im Kontakt mit dem fluiden Medium ist. Die Membran weist einen zweiten Bereich auf, welcher bei Verwendung nicht in Kontakt mit dem fluiden Medium ist. Die stoffschlüssige Verbindung ist im zweiten Bereich angeordnet. Stoffschlüssige Verbindungen als Lötverbindung oder Schweissverbindung ausgeführt weisen üblicherweise eine höhere Anzahl von Rissen oder Poren auf. Auch im Fall von einer stoffschlüssigen Verbindung durch Klebstoff kann der Klebstoff durch das fluide Medium Schaden nehmen. Vorteilhafterweise ist daher die stoffschlüssige Verbindung im zweiten Bereich angeordnet, welcher nicht dem fluiden Medium ausgesetzt ist.

Weist die Membran eine Beschichtung auf, so ist diese zumindest im gesamten ersten Bereich angeordnet, kann sich allerdings auch zumindest teilweise über den zweiten Bereich erstrecken.

Ein zweiter Bereich ist nicht im Kontakt mit dem fluiden Medium im Sinne dieser Beschreibung, wenn die Konzentration korrosiver Bestandteile des fluiden Mediums im zweiten Bereich maximal 1% der Konzentration korrosiver Bestandteile im ersten Bereich entspricht.

Erster und zweiter Bereich können Beispielsweise durch ein Dichtungselement voneinander getrennt sein. Je nach Anwendung des Aufnehmers bezüglich des Temperaturbereichs und des Druckbereichs, kann eine Metalldichtung wie eine Kupferdichtung, eine Dichtung aus Stählen 1.4404 oder 1.4301, ein Dichtungselement aus einer Metalllegierung oder metallbeschichtete Dichtungen aus einer Metalllegierung verwendet werden. Auch sind für bestimmte Temperaturbereiche und Druckbereiche Kunststoffdichtungen bekannt, beispielsweise aus Polytetrafluorethylen, Fluorelastomeren oder Nitrilverbindungen. Auch andere Materialien kommen als Dichtungselement in Frage.

Der Aufnehmer wird bevorzugt verwendet zur Ermittlung eines Drucks eines fluiden Mediums, wenn das fluide Medium korrosiv ist und herkömmliche Aufnehmer nicht verwendet werden können.

Besonders bevorzugt findet der Aufnehmer Verwendung zur Ermittlung eines Drucks eines fluiden Mediums, welches zumindest einen Anteil molekularen und/oder atomaren Wasserstoff aufweist. Wasserstoff führt bekanntermassen in einer Vielzahl metallischer Werkstoffe zur sogenannten Wasserstoffversprödung, welche bei thermischer und/oder mechanischer Beanspruchung zu Wasserstoffversprödung und einer Minderung der Dehngrenze führt. Ein oben beschriebener Aufnehmer vermindert diese Nachteile erheblich.

Alle beschriebenen Ausführungsformen eines Aufnehmers sind als Ausführungsform mit einem im zweiten Raum angeordneten Druckübertragungsmedium möglich. Es sind jedoch auch alle beschriebenen Ausführungsformen ohne ein im zweiten Raum angeordnetes Druckübertragungsmedium ausführbar.

Die Erfindung umfasst auch einen Aufnehmer zur Ermittlung einer Temperatur eines fluiden Mediums. Der Aufnehmer weist ein dem fluiden Medium zugewandtes druckseitiges Ende auf. Der Aufnehmer weist ein Gehäuse auf. Der Aufnehmer weist eine Messanordnung zur Ermittlung einer Temperatur eines fluiden Mediums auf. Die Messanordnung ist innerhalb des Gehäuses angeordnet. Der Aufnehmer weist eine Membran in einer der oben beschriebenen Ausführungsformen auf.

### Kurze Beschreibung der Zeichnungen

Im Folgenden wird die Erfindung beispielhaft unter Beizug der Figuren näher erklärt. Es zeigen
- Fig. 1: zeigt eine schematische Schnittansicht einer Ausführungsform eines Aufnehmers mit einer Ausführungsform einer erfindungsgemässen Membran, wobei eine optionale Beschichtung durch die strichpunktiere Linie dargestellt ist;
- Fig. 2: zeigt eine schematische Schnittansicht einer Ausführungsform einer Membran;
- Fig. 3: zeigt eine schematische Schnittansicht einer weiteren Ausführungsform einer Membran;
- Fig. 4: zeigt eine schematische Schnittansicht einer weiteren Ausführungsform einer Membran;
- Fig. 5: zeigt eine schematische Schnittansicht eines Teils eines Aufnehmers mit einer Membran nach Fig. 3, welcher in einer Wandung angeordnet ist;
- Fig. 6: zeigt eine schematische Schnittansicht eines Teils eines Aufnehmers mit einer Membran nach Fig. 2, welcher in einer Wandung angeordnet ist;
- Fig. 7: zeigt eine schematische Schnittansicht einer weiteren Ausführungsform einer Membran;
- Fig. 8: zeigt eine schematische Schnittansicht einer weiteren Ausführungsform einer Membran;
- Fig. 9: zeigt eine schematische Schnittansicht einer weiteren Ausführungsform einer Membran.

### Wege zur Ausführung der Erfindung

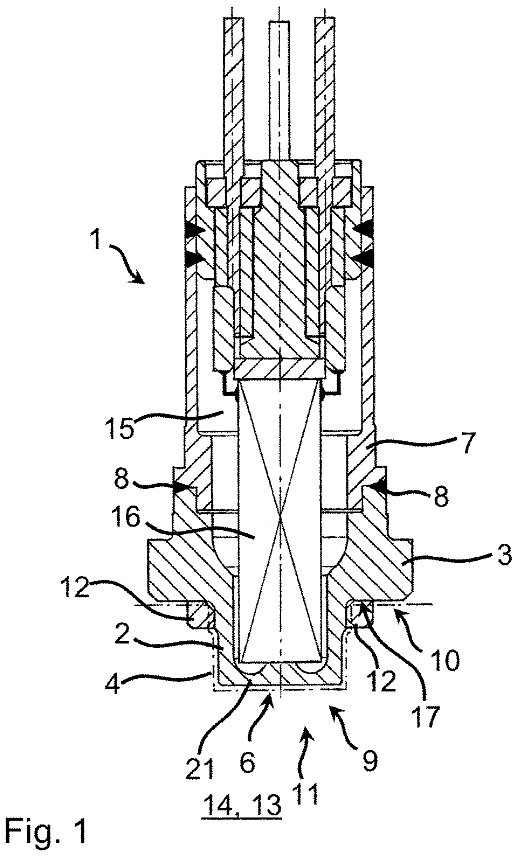

Fig. 1 zeigt eine schematische Schnittansicht einer Ausführungsform eines Aufnehmers 1 mit einer Ausführungsform einer erfindungsgemässen Membran 2, wobei eine optionale Beschichtung 4 durch die strichpunktiere Linie dargestellt ist.

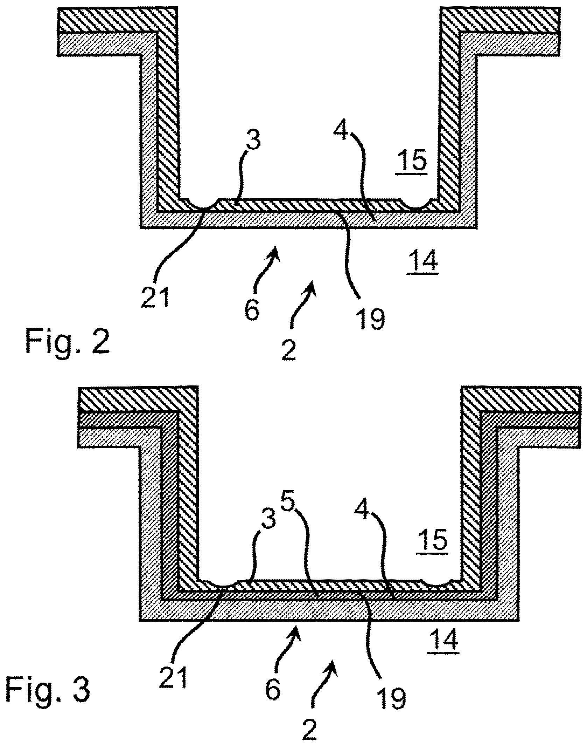

In der nicht massstabsgetreuen Darstellung der Fig. 1 ist eine optionale Beschichtung 4 des metallischen Werkstoffs 3 als strichpunktierte Linie dargestellt. Fig. 2 bis Fig. 6 stellen die Beschichtung einer Membran 2 im Folgenden abweichend von der Darstellung aus Fig. 1 dar.

In weiteren Ausführungsformen der Fig. 2 bis Fig. 9 sind die Bezugszeichen einheitlich für gleiche oder entsprechende Elemente verwendet.

Die Fig. 2 bis Fig. 4 zeigen weitere Ausführungsformen einer Membran 2. Dicke der Membran 2 und Dicke der Beschichtung 4 sind zur besseren Verdeutlichung jeweils nicht proportional dargestellt.

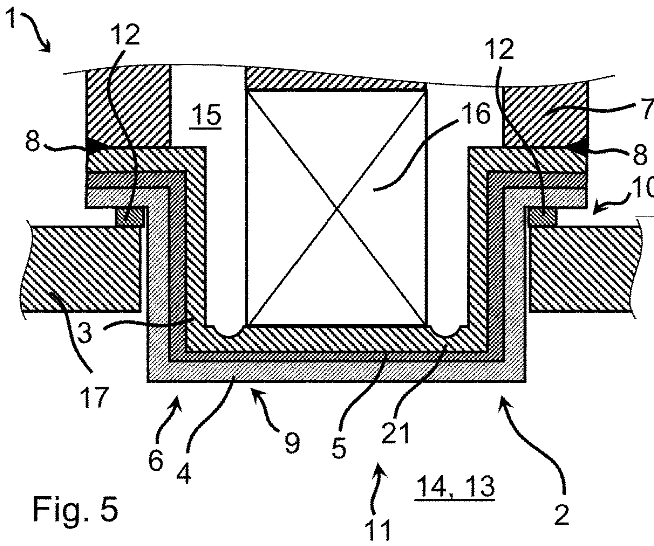

Die Fig. 5 bis Fig. 6 zeigen weitere Ausführungsformen eines Aufnehmers 1 mit einer Membran 2. Dicke der Membran 2 und Dicke der Beschichtung 4 sind zur besseren Verdeutlichung jeweils nicht proportional dargestellt.

Die Membran 2 der Fig. 1 bis 6 weist einen metallischen Werkstoff 3 auf und trennt einen ersten Raum 14 von einem zweiten Raum 15 hermetisch. Im ersten Raum 14 ist ein fluides Medium 13, von dem mindestens eine physikalische Grösse ermittelbar ist. Eine physikalische Grösse ist beispielsweise ein Druck und/oder eine Temperatur.

Die Oberfläche 6 der Membran 2 ist dem fluiden Medium 13 zugewandt. Die Membran 2 weist einen ersten Bereich 9 auf, welcher bei Verwendung der Membran 2 im Kontakt mit dem fluiden Medium 13 ist. Die Membran 2 weist einen zweiten Bereich 10 auf, welcher bei Verwendung nicht im Kontakt mit dem fluiden Medium 13 ist, wie in Fig. 1 bis 6 dargestellt.

Die Membran 2 weist vorteilhafterweise einen dünnwandigen Bereichs 21 auf. Bevorzugt weist der dünnwandige Bereich 21 eine Dicke kleiner 500 µm auf, um einen Druck eines fluiden Mediums 13 vom ersten Raum 14 an einen zweiten Raum 15 möglichst verlustfrei zu übermitteln.

Die Membran 2 in den Ausführungsformen der Fig. 1 bis 6 weist die Beschichtung 4 zur Verringerung der Permeabilität bezüglich molekularem oder atomarem Wasserstoffs auf, welche Beschichtung 4 zumindest im Bereich, welcher bei Verwendung im Kontakt mit dem fluiden Medium 13 ist, zwischen dem metallischen Werkstoff 3 der Membran 2 und dem fluidem Medium 13 angeordnet ist. In Fig. 1 ist die Beschichtung optional dargestellt in Form einer strichpunktierten Linie.

Die Membran 2 weist in den Ausführungsformen der Fig. 3 und Fig. 5 eine Haftvermittlerschicht 5 auf, welche eine Delamination der Beschichtung 4 vom metallischen Werkstoff 3 der Membran 2 verhindert.

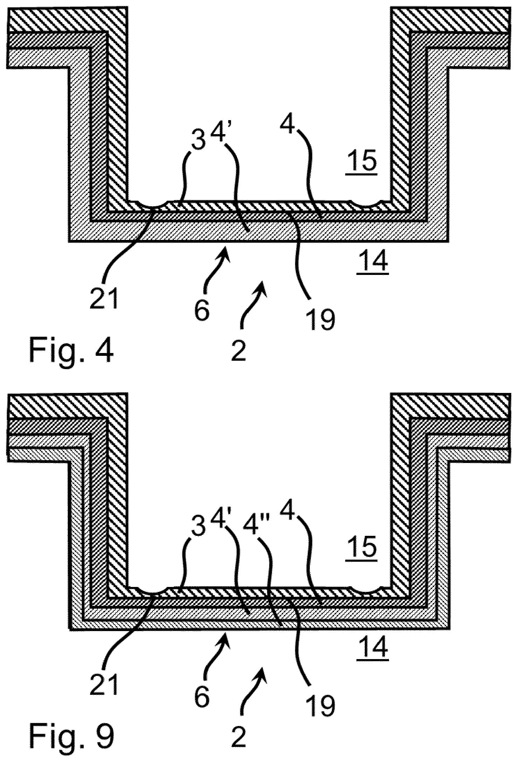

Die Membran 2 weist in der Ausführungsform nach Fig. 4 eine weitere Beschichtung 4' auf, welche auf der dem metallischen Werkstoff 3 abgewandten Seite der Beschichtung 4 angeordnet ist.

Die Membran 2 weist in der Ausführungsform nach Fig. 9 mindestens eine weitere Beschichtung 4', 4", 4‴,... auf, welche auf der dem metallischen Werkstoff 3 abgewandten Seite der Beschichtung 4 angeordnet ist. Die weitere Beschichtung 4', 4'', 4‴,... weist ein nicht-stöchiometrisches Carbid, Nitrid oder Oxid auf, analog zur bereits beschriebenen Beschichtung 4.

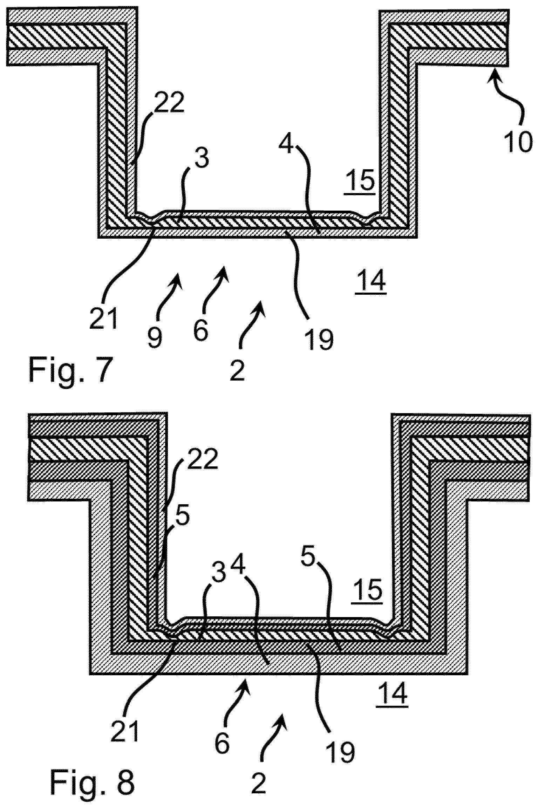

Die Membran 2 weist in der Ausführungsform nach Fig. 7 zusätzlich zu einer Beschichtung 4 auf der dem fluiden Medium 13 zugewandten Seite des metallischen Werkstoffs 3 beispielhaft eine innere Beschichtung 22 auf. Die innere Beschichtung 22 ist auf der dem fluiden Medium 13 abgewandten Seite des metallischen Werkstoffs 3 der Membran 2 im zweiten Raum 15 angeordnet. In anderen Ausführungsformen ist eine innere Beschichtung 22 ebenso möglich, auch wenn nicht in den Figuren gezeigt.

Die Membran 2 weist in der Ausführungsform nach Fig. 8 eine Beschichtung 4 und eine Haftvermittlerschicht 5 auf der dem fluiden Medium 13 zugewandten Seite des metallischen Werkstoffs 3 der Membran 2 auf. Zusätzlich weist diese Ausführungsform der Membran 2 auf der dem fluiden Medium 13 abgewandten Seite des metallischen Werkstoffs 3 eine Haftvermittlerschicht 5 auf, welche eine innere Beschichtung 22 mit dem metallischen Werkstoff 3 verbindet.

Die Fig. 1 und Fig. 5 bis Fig. 6 zeigen jeweils eine Ausführungsform einer Membran 2 in einem Aufnehmer 1 zur Ermittlung eines Drucks eines fluiden Mediums 13. Der Aufnehmer 1 weist ein dem fluiden Medium 13 zugewandtes druckseitiges Ende 11 auf. Der Aufnehmer 1 weist ein Gehäuse 7 auf. Im Gehäuse 7 ist eine Messanordnung 16 angeordnet. Jede Ausführungsform eines Aufnehmers 1 nach Fig. 1, Fig. 5 oder Fig. 6 zeigt eine erfindungsgemässe Membran 2.

Die Membran 2 ist am druckseitigen Ende 11 des Aufnehmers 1 angeordnet und trennt die Messanordnung 16 hermetisch vom fluiden Medium 13. Gehäuse 7 und Membran 2 sind mit einer stoffschlüssigen Verbindung 8 verbunden. Die Membran 2 weist einen ersten Bereich 9 auf, welcher bei Verwendung im Kontakt mit dem fluiden Medium 13 ist. Die Membran 2 weist einen zweiten Bereich 10 auf, welcher bei Verwendung nicht in Kontakt mit dem fluiden Medium 13 ist. Erster und zweiter Bereich 9,10 sind bei Verwendung des Aufnehmers 1 durch ein Dichtungselement 12 voneinander getrennt. Die stoffschlüssige Verbindung 8 ist bei jeder dargestellten Ausführungsform im zweiten Bereich 10 angeordnet.

Es ist jedoch auch denkbar, die stoffschlüssige Verbindung 8 in einem Bereich 9,10 anzuordnen, welcher bei Verwendung der Membran 2 in Kontakt mit dem fluiden Medium 13 ist. Hierbei wird vorteilhafterweise die stoffschlüssige Verbindung 8 mit der Beschichtung 4 vollständig überdeckt.

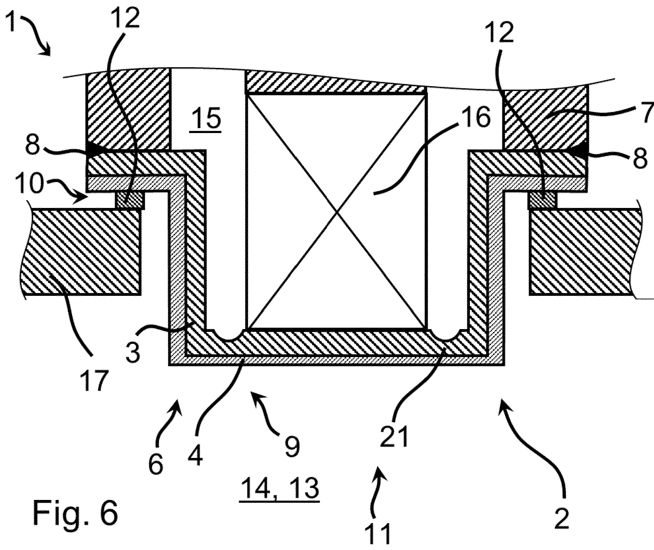

Figuren 5 und 6 zeigen den Aufnehmer 1 zur Verwendung zur Ermittlung eines Drucks eines fluiden Mediums 13 in eine Wandung 17 eingesetzt. Die Wandung 17 kann beispielsweise eine Wandung 17 eines Tanks für ein fluides Medium 13, eines Kompressors, einer Wärmepumpe, einer Kältemaschine, einer Leitung für ein fluides Medium 13, einer Brennkammer eines Verbrennungsmotors oder einer Gasturbine sein.

Die in dieser Schrift offenbarten Ausführungsformen der Membran 2 oder des Aufnehmers 1 sind selbstverständlich miteinander kombinierbar. Es sind explizit in dieser Schrift auch Ausführungsformen einbezogen, welche eine Kombination der Merkmale hierin beschriebener Ausführungsformen aufweisen.

### Bezugszeichenliste

- 1: Aufnehmer
- 2: Membran
- 3: metallischer Werkstoff
- 4: Beschichtung
- 4': Beschichtung
- 5: Haftvermittlerschicht
- 6: Oberfläche
- 7: Gehäuse
- 8: stoffschlüssige Verbindung
- 9: erster Bereich
- 10: zweiter Bereich
- 11: druckseitiges Ende
- 12: Dichtungselement
- 13: fluides Medium
- 14: erster Raum
- 15: zweiter Raum
- 16: Messanordnung
- 17: Wandung
- 19: Grenzfläche
- 21: dünnwandiger Bereich
- 22: innere Beschichtung

## Patentansprüche

1. Membran (2) zur hermetischen Trennung eines ersten Raumes (14) mit wasserstoffhaltigem fluidem Medium (13) von einem zweiten Raum (15); wobei die Membran (2) einen metallischen Werkstoff (3) aufweist; wobei die Membran (2) eine Beschichtung (4) zur Verringerung der Permeabilität bezüglich molekularen und/oder atomaren Wasserstoffs aufweist, welche Beschichtung (4) zumindest in einem Bereich, welcher bei Verwendung im Kontakt mit dem fluiden Medium (13) ist, zwischen dem metallischen Werkstoff (3) der Membran (2) und dem fluidem Medium (13) angeordnet ist; **dadurch gekennzeichnet, dass** die Beschichtung (4) mindestens ein nicht-stöchiometrisches Oxid, ein nicht-stöchiometrisches Carbid oder ein nicht-stöchiometrisches Nitrid aufweist.

2. Membran (2) zur hermetischen Trennung eines ersten Raumes (14) mit wasserstoffhaltigem fluidem Medium (13) von einem zweiten Raum (15) nach dem vorgehenden Anspruch, **dadurch gekennzeichnet, dass** die Beschichtung (4) ein nicht-stöchiometrisches Carbid Gemisch (1-y)M-yMCₓ (mit 0 < x < x_{M,C} und 0 < y <= 1, mit M=Si mit x_{Si,C}=1, oder M=Al mit x_{Al,C}=3/4, oder M=Ti mit x_{Ti,C}=1) aufweist; oder dass die Beschichtung (4) ein nicht-stöchiometrisches Nitrid Gemisch (1-y)M-yMNₓ (mit 0 < x < x_{M,N} und 0 < y <= 1, mit M=Al mit x_{Al,N}=1, oder M=Cr mit x_{Cr,N}=1, oder M=Si mit x_{Si,N}=4/3, oder M=Ti mit x_{Ti,N}=1) aufweist; oder dass die Beschichtung (4) ein nicht-stöchiometrisches Oxid Gemisch (1-y)M-yMOₓ (mit 0 < x < x_{M,O} und 0 < y <= 1; mit M=Al mit x_{Al,O}=1.5, oder M=Cr mit x_{Cr,O}=1.5, oder M=Si mit x_{Si,O}=2, oder M=Ti mit x_{Ti,O}=2, oder M=Zr mit x_{Zr,O}=2, oder M=seltene Erden mit x_{Seltene Erden,O}= 1 bis 2) aufweist.

3. Membran (2) zur hermetischen Trennung eines ersten Raumes (14) mit wasserstoffhaltigem fluidem Medium (13) von einem zweiten Raum (15) nach dem vorgehenden Anspruch; **dadurch gekennzeichnet, dass** die Beschichtung (4) ein nicht-stöchiometrisches Gemisch (1-y)M-yMOₓ oder (1-y)M-yMNₓ oder (1-y)M-yMCₓ mit einem Gradienten innerhalb der Beschichtung (4) aufweist, und dass der Anteil y innerhalb der Beschichtung (3) mit zunehmenden Abstand vom metallischen Werkstoff (3) graduell zunimmt; oder dass die Beschichtung (4) ein nicht-stöchiometrisches Gemisch (1-y)M-yMOₓ oder (1-y)M-yMNₓ oder (1-y)M-yMCₓ mit einem Gradienten innerhalb der Beschichtung (4) aufweist, und dass der Anteil x innerhalb der Beschichtung (4) mit zunehmenden Abstand vom metallischen Werkstoff (3) graduell zunimmt; oder dass die Beschichtung (4) ein nicht-stöchiometrisches Gemisch (1-y)M-yMOₓ oder (1-y)M-yMNₓ oder (1-y)M-yMCₓ mit einem Gradienten innerhalb der Beschichtung (4) aufweist, und dass der Anteil x und der Anteil y innerhalb der Beschichtung (4) mit zunehmenden Abstand vom metallischen Werkstoff (3) graduell zunehmen.

4. Membran (2) zur hermetischen Trennung eines ersten Raumes (14) mit wasserstoffhaltigem fluidem Medium (13) von einem zweiten Raum (15) nach dem vorgehenden Anspruch; **dadurch gekennzeichnet, dass** die Beschichtung (4) ein nicht-stöchiometrisches Gemisch (1-y)M-yMOₓ oder (1-y)M-yMNₓ oder (1-y)M-yMCₓ mit einem Gradienten innerhalb der Beschichtung (4) aufweist; und dass die Beschichtung (4) in einem Abstand von der Grenzfläche (19) zwischen Beschichtung (4) und metallischem Werkstoff (3) in ein stöchiometrisches Gemisch eines Carbids, Nitrids oder Oxids graduell übergeht.

5. Membran (2) zur hermetischen Trennung eines ersten Raumes (14) mit wasserstoffhaltigem fluiden Medium (13) von einem zweiten Raum (15) nach einem der vorgehenden Ansprüche; **dadurch gekennzeichnet, dass** die Beschichtung (4) dünner als die Dicke des metallischen Werkstoffes (3) ist oder dass die Dicke der Beschichtung (4) 10% der Dicke der Membran (2) nicht überschreitet.

6. Membran (2) zur hermetischen Trennung eines ersten Raumes (14) mit wasserstoffhaltigem fluidem Medium (13) von einem zweiten Raum (15) nach einem der vorgehenden Ansprüche; **dadurch gekennzeichnet, dass** die Beschichtung (4) einen Wärmeausdehnungskoeffizient aufweist; dass der metallische Werkstoffe (3) einen Wärmeausdehnungskoeffizient aufweist; dass der Wärmeausdehnungskoeffizient der Beschichtung (4) an einer Grenzfläche (19) zwischen metallischem Werkstoff (3) und Beschichtung (4) um nicht mehr als 50% vom Wärmeausdehnungskoeffizienten des metallischen Werkstoffes (3) abweicht.

7. Membran (2) zur hermetischen Trennung eines ersten Raumes (14) mit wasserstoffhaltigem fluidem Medium (13) von einem zweiten Raum (15) nach einem der vorgehenden Ansprüche; **dadurch gekennzeichnet, dass** die Membran (2) mindestens eine weitere Beschichtung (4', 4'', 4‴,...) aufweist; dass die weitere Beschichtung (4', 4'', 4''',...) auf der dem metallischen Werkstoff (3) abgewandten Seite der Beschichtung (4) angeordnet ist; und dass die weitere Beschichtung (4', 4'', 4‴,...) stöchiometrisches Oxid, Carbid oder Nitrid aufweist.

8. Membran (2) zur hermetischen Trennung eines ersten Raumes (14) mit wasserstoffhaltigem fluidem Medium (13) von einem zweiten Raum (15) nach dem vorgehenden Anspruch; **dadurch gekennzeichnet, dass** die Beschichtung (4) einen Wärmeausdehnungskoeffizient aufweist; dass die weitere Beschichtung (4', 4", 4‴,...) einen Wärmeausdehnungskoeffizient aufweist; dass der metallische Werkstoffe (3) einen Wärmeausdehnungskoeffizient aufweist; und dass der Wärmeausdehnungskoeffizient der Beschichtung (4) zwischen dem Wärmeausdehnungskoeffizienten des metallischen Werkstoffs (3) und dem Wärmeausdehnungskoeffizienten der weiteren Beschichtung (4', 4", 4‴,...) liegt.

9. Membran (2) zur hermetischen Trennung eines ersten Raumes (14) mit wasserstoffhaltigem fluidem Medium (13) von einem zweiten Raum (15) nach einem der vorgehenden Ansprüche, **dadurch gekennzeichnet, dass** die Membran (2) eine Haftvermittlerschicht (5) aufweist, welche eine Delamination der Beschichtung (4) vom metallischen Werkstoff (3) der Membran (2) verhindert; dass die Haftvermittlerschicht zwischen dem metallischen Werkstoff (3) der Membran (2) und der Beschichtung (4) angeordnet ist; und dass die Haftvermittlerschicht (5) Aluminium oder Metalle der Seltenen Erden oder ein Refraktärmetall aufweist.

10. Membran (2) zur hermetischen Trennung eines ersten Raumes (14) mit wasserstoffhaltigem fluidem Medium (13) von einem zweiten Raum (15) nach dem vorgehenden Ansprüche, **dadurch gekennzeichnet, dass** die Haftvermittlerschicht eine Reinheit von mindestens 75 Gew% aufweist; oder dass die die Haftvermittlerschicht zumindest 90 Gew% Zirkonium oder Wolfram aufweist.

11. Membran (2) zur hermetischen Trennung eines ersten Raumes (14) mit wasserstoffhaltigem fluidem Medium (13) von einem zweiten Raum (15) nach einem der vorgehenden Ansprüche, **dadurch gekennzeichnet, dass** die Membran (2) eine innere Beschichtung (22) zur Verringerung der Permeabilität bezüglich molekularen und/oder atomaren Wasserstoffs aufweist, welche innere Beschichtung (22) auf der dem fluiden Medium (13) abgewandten Seite des metallischen Werkstoffs (3) der Membran (2) im zweiten Raum (15) angeordnet ist.

12. Membran (2) zur hermetischen Trennung eines ersten Raumes (14) mit wasserstoffhaltigem fluidem Medium (13) von einem zweiten Raum (15) nach einem der vorgehenden Ansprüche, **dadurch gekennzeichnet, dass** die innere Beschichtung (22) ein nicht-stöchiometrisches Carbid Gemisch (1-y)M-yMCₓ (mit 0 < x < x_{M,C} und 0 < y <= 1, mit M=Si mit x_{Si,C}=1, oder M=Al mit x_{Al,C}=3/4, oder M=Ti mit x_{Ti,C}=1) aufweist; oder dass die Beschichtung (4) ein nicht-stöchiometrisches Nitrid Gemisch (1-y)M-yMNₓ (mit 0 < x < x_{M,N} und 0 < y <= 1, mit M=Al mit x_{Al,N}=1, oder M=Cr mit x_{Cr,N}=1, oder M=Si mit x_{Si,N}=4/3, oder M=Ti mit x_{Ti,N}=1) aufweist; oder dass die Beschichtung (4) ein nicht-stöchiometrisches Oxid Gemisch (1-y)M-yMOₓ (mit 0 < x < x_{M,O} und 0 < y <= 1; mit M=Al mit x_{Al,O}=1.5, oder M=Cr mit x_{Cr,O}=1.5, oder M=Si mit x_{Si,O}=2, oder M=Ti mit x_{Ti,O}=2, oder M=Zr mit x_{Zr,O}=2, oder M=seltene Erden mit x_{Seltene Erden,O}= 1 bis 2) aufweist.

13. Membran (2) zur hermetischen Trennung eines ersten Raumes (14) mit wasserstoffhaltigem fluidem Medium (13) von einem zweiten Raum (15) nach einem der vorgehenden Ansprüche, **dadurch gekennzeichnet, dass** die Membran (4) zumindest teilweise eine Dicke kleiner 500 µm aufweist.

14. Membran (2) zur hermetischen Trennung eines ersten Raumes (14) mit wasserstoffhaltigem fluidem Medium (13) von einem zweiten Raum (15) nach einem der vorgehenden Ansprüche, **dadurch gekennzeichnet, dass** der metallische Werkstoff (3) ein feinkörniger Stahl mit einem Gefüge aus Martensit, Bainit, Nadelferrit, Widmannstätten-Ferrit oder einem Gemisch dieser Gefüge oder Martensit mit teilkohärenten oder inkohärenten Ausscheidungen ist.

15. Aufnehmer (1) zur Ermittlung eines Drucks eines wasserstoffhaltigen fluiden Mediums (13); wobei der Aufnehmer (1) ein dem fluiden Medium (13) zugewandtes druckseitiges Ende (11) umfasst; wobei der Aufnehmer (1) ein Gehäuse (7) aufweist; wobei der Aufnehmer (1) eine Messanordnung (16) aufweist; **dadurch gekennzeichnet, dass** der Aufnehmer (1) eine Membran (2) nach einem den vorgehenden Ansprüche aufweist.

## Claims

1. A diaphragm (2) for hermetically separating a first space (14) accommodating a hydrogen-containing fluid medium (13) from a second space (15); wherein said diaphragm (2) comprises a metallic material (3); wherein said diaphragm (2) comprises a coating (4) for reducing the permeability for molecular and/or atomic hydrogen, wherein said coating (4) is arranged between the metallic material (3) of the diaphragm (2) and the fluid medium (13) at least in an area that is in contact with the fluid medium (13) during use; **characterized in that** the coating (4) comprises at least a non-stoichiometric oxide, a non-stoichiometric carbide or a non-stoichiometric nitride.

2. The diaphragm (2) for hermetically separating a first space (14) accommodating a hydrogen-containing fluid medium (13) from a second space (15) according to the preceding claim, **characterized in that** the coating (4) comprises a non-stoichiometric carbide mixture (1-y)M-yMCₓ (with 0 < x < x_{M,C} and 0 < y <= 1, where M=Si with x_{Si,C}=1, or M=Al with x_{Al,C}=3/4, or M =Ti with x_{Ti,C}=1) ; or **in that** the coating (4) comprises a non-stoichiometric nitride mixture (1-y)M-yMNₓ (with 0 < x < x_{M,N} and 0 < y <= 1, where M=Al with x_{Al,N}=1, or M=Cr with x_{Cr,N}=1, or M=Si with x_{Si,N}=4/3, or M=Ti with x_{Ti,N}=1); or **in that** the coating (4) comprises a non-stoichiometric oxide mixture (1-y)M-yMOₓ (with 0 < x < x_{M,O} and 0 < y <= 1; where M=Al with x_{Al,O}=1.5, or M=Cr with x_{Cr,O}=1.5, or M=Si with x_{Si,O}=2, or M=Ti with x_{Ti,O} = 2, or M=Zr with x_{Zr,O} = 2, or M = rare earths with X_{rare earths,0} = 1 to 2).

3. The diaphragm (2) for hermetically separating a first space (14) accommodating a hydrogen-containing fluid medium (13) from a second space (15) according to the preceding claim; **characterized in that** the coating (4) comprises a non-stoichiometric mixture (1-y)M-yMOₓ or (1-y)M-yMNₓ or (1-y)M-yMCₓ with a gradient within the coating (4), and **in that** within the coating (3) the proportion y gradually increases with increasing distance from the metallic material (3); or **in that** the coating (4) comprises a non-stoichiometric mixture (1-y)M-yMOₓ or (1-y)M-yMNₓ or (1-y)M-yMCₓ with a gradient within the coating (4), and **in that** within the coating (4) the proportion x gradually increases with increasing distance from the metallic material (3); or **in that** the coating (4) comprises a non-stoichiometric mixture (1-y)M-yMOₓ or (1-y)M-yMNₓ or (1-y)M-yMCₓ with a gradient within the coating (4), and **in that** within the coating (4) the proportion x and the proportion y gradually increase with increasing distance from the metallic material (3).

4. The diaphragm (2) for hermetically separating a first space (14) accommodating a hydrogen-containing fluid medium (13) from a second space (15) according to the preceding claim; **characterized in that** the coating (4) comprises a non-stoichiometric mixture (1-y)M-yMOₓ or (1-y)M-yMNₓ or (1-y)M-yMCₓ with a gradient within the coating (4); and **in that** there is a gradual transition of the coating (4) into a stoichiometric mixture of a carbide, nitride or oxide at a distance from the interface (19) between the coating (4) and the metallic material (3).

5. The diaphragm (2) for hermetically separating a first space (14) accommodating a hydrogen-containing fluid medium (13) from a second space (15) according to any of the preceding claims; **characterized in that** the coating (4) is thinner than the thickness of the metallic material (3) or **in that** the thickness of the coating (4) does not exceed 10% of the thickness of the diaphragm (2).

6. The diaphragm (2) for hermetically separating a first space (14) accommodating a hydrogen-containing fluid medium (13) from a second space (15) according to any of the preceding claims; **characterized in that** the coating (4) has a coefficient of thermal expansion; **in that** the metallic material (3) has a coefficient of thermal expansion; **in that** at an interface (19) between the metallic material (3) and the coating (4) the coefficient of thermal expansion of the coating (4) does not differ by more than 50% from the coefficient of thermal expansion of the metallic material (3).

7. The diaphragm (2) for hermetically separating a first space (14) accommodating a hydrogen-containing fluid medium (13) from a second space (15) according to any of the preceding claims; **characterized in that** the diaphragm (2) comprises at least one further coating (4', 4", 4‴,...); **in that** the further coating (4', 4'', 4‴,...) is arranged on the side of the coating (4) that faces away from the metallic material (3); and **in that** the further coating (4', 4'', 4‴,...) comprises stoichiometric oxide, carbide or nitride.

8. The diaphragm (2) for hermetically separating a first space (14) accommodating a hydrogen-containing fluid medium (13) from a second space (15) according to the preceding claim; **characterized in that** the coating (4) has a coefficient of thermal expansion; **in that** the further coating (4', 4", 4‴,...) has a coefficient of thermal expansion; **in that** the metallic material (3) has a coefficient of thermal expansion; and **in that** the coefficient of thermal expansion of the coating (4) has a value between that of the coefficient of thermal expansion of the metallic material (3) and the coefficient of thermal expansion of the further coating (4 ', 4'', 4‴,...).

9. The diaphragm (2) for hermetically separating a first space (14) accommodating a hydrogen-containing fluid medium (13) from a second space (15) according to any of the preceding claims, **characterized in that** the diaphragm (2) comprises an adhesion promoter layer (5) that prevents delamination of the coating (4) from the metallic material (3) of the diaphragm (2); **in that** the adhesion promoter layer is arranged between the metallic material (3) of the diaphragm (2) and the coating (4); and **in that** the adhesion promoter layer (5) comprises aluminum or rare earth metals or a refractory metal.

10. The diaphragm (2) for hermetically separating a first space (14) accommodating a hydrogen-containing fluid medium (13) from a second space (15) according to the preceding claims, **characterized in that** the adhesion promoter layer has a purity of at least 75% by weight; or **in that** the adhesion promoter layer comprises at least 90% by weight of zirconium or tungsten.

11. The diaphragm (2) for hermetically separating a first space (14) accommodating a hydrogen-containing fluid medium (13) from a second space (15) according to any of the preceding claims, **characterized in that** the diaphragm (2) comprises an internal coating (22) for reducing the permeability for molecular and/or atomic hydrogen, which internal coating (22) is arranged in the second space (15) on the side of the metallic material (3) of the diaphragm (2) that faces away from the fluid medium (13).

12. The diaphragm (2) for hermetically separating a first space (14) accommodating a hydrogen-containing fluid medium (13) from a second space (15) according to any of the preceding claims, **characterized in that** the internal coating (22) comprises a non-stoichiometric carbide mixture (1-y)M-yMCₓ (with 0 < x < x_{M,C} and 0 < y <= 1, where M=Si with x_{Si,C}=1, or M=Al with x_{Al,C}=3/4, or M=Ti with x_{Ti,C}=1); or **in that** the coating (4) comprises a non-stoichiometric nitride mixture (1-y)M-yMNₓ (with 0 < x < x_{M,N} and 0 < y <= 1, where M=Al with x_{Al,N}=1, or M=Cr with x_{Cr,N}=1, or M=Si with x_{Si,N}=4/3, or M=Ti with x_{Ti,N}=1); or **in that** the coating (4) comprises a non-stoichiometric oxide mixture (1-y)M-yMOₓ (with 0 < x < x_{M,O} and 0 < y <= 1; where M=Al with x_{Al,O}=1.5, or M=Cr with x_{Cr,O}=1.5, or M=Si with x_{Si,O}=2, or M= Ti with x_{Ti,O}=2, or M=Zr with x_{Zr,O}=2, or M=rare earths with x_{rare earths,O}=1 to 2).

13. The diaphragm (2) for hermetically separating a first space (14) accommodating a hydrogen-containing fluid medium (13) from a second space (15) according to any of the preceding claims, **characterized in that** the diaphragm (4) at least partially has a thickness of less than 500 µm.

14. The diaphragm (2) for hermetically separating a first space (14) accommodating a hydrogen-containing fluid medium (13) from a second space (15) according to any of the preceding claims, **characterized in that** the metallic material (3) is a fine-grained steel having a structure of martensite, bainite, needle ferrite, Widmannstätten ferrite or a mixture of these structures or of martensite with partially coherent or incoherent precipitates.

15. A transducer (1) for measuring a pressure of a hydrogen-containing fluid medium (13); wherein the transducer (1) comprises a pressure-exposed end (11) facing the fluid medium (13); wherein the transducer (1) comprises a housing (7); wherein the transducer (1) comprises a measuring arrangement (16); **characterized in that** the transducer (1) comprises a diaphragm (2) according to any of the preceding claims.

## Revendications

1. Diaphragme (2) pour séparer hermétiquement un premier espace (14) contenant un milieu fluide hydrogéné (13) d'un second espace (15) ; ledit diaphragme (2) étant constitué d'un matériau métallique (3) ; ledit diaphragme (2) comprenant un revêtement (4) destiné à réduire la perméabilité à l'hydrogène moléculaire et/ou atomique, lequel revêtement (4) est disposé entre ledit matériau métallique (3) du diaphragme (2) et ledit milieu fluide (13) au moins dans une zone qui est en contact avec le milieu fluide (13) pendant l'utilisation ; **caractérisé en ce que** le revêtement (4) comprend au moins un oxyde non stœchiométrique, un carbure non stœchiométrique ou un nitrure non stœchiométrique.

2. Diaphragme (2) pour séparer hermétiquement un premier espace (14) contenant un milieu fluide hydrogéné (13) d'un second espace (15) selon la revendication précédente, **caractérisé en ce que** le revêtement (4) comprend un mélange de carbures non stœchiométriques (1-y)M-yMCₓ (avec 0 < x < x_{M,C} et 0 < y <= 1, où M=Si avec x_{Si,C}=1 ou M=Al avec x_{Al,C}=3/4 ou M=Ti avec x_{Ti,C}=1) ; ou **en ce que** le revêtement (4) comprend un mélange de nitrures non stœchiométriques (1-y) M-yMNₓ (avec 0 < x < x_{M,N} et 0 < y <= 1, où M=Al avec x_{Al,N}=1 ou M=Cr avec x_{Cr,N}= 1 ou M=Si avec x_{Si,N}=4/3 ou M=Ti avec x_{Ti,N}=1) ; ou **en ce que** le revêtement (4) comprend un mélange d'oxydes non stœchiométriques (1-y)M-yMOₓ (avec 0 < x < x_{M,O} et 0 < y <= 1 ; où M=Al avec x_{Al,O}=1,5 ou M=Cr avec x_{Cr,O}=1,5 ou M=Si avec x_{Si,O}=2 ou M=Ti avec x_{Ti,O}=2 ou M=Zr avec x_{Zr,O}=2 ou M=terres rares avec x_{terres rares,O}= 1 à 2) .

3. Diaphragme (2) pour séparer hermétiquement un premier espace (14) contenant un milieu fluide hydrogéné (13) d'un second espace (15) selon la revendication précédente ; **caractérisé en ce que** le revêtement (4) comprend un mélange non stœchiométrique (1-y)M-yMOₓ ou (1-y)M-yMNₓ ou (1-y)M-yMCₓ avec un gradient au sein du revêtement (4), et **en ce que**, au sein du revêtement (3), la proportion y augmente progressivement avec l'augmentation de la distance au matériau métallique (3) ; ou **en ce que** le revêtement (4) comprend un mélange non stœchiométrique (1-y)M-yMOₓ ou (1-y)M-yMNₓ ou (1-y)M-yMCₓ, avec un gradient au sein du revêtement (4), et **en ce que**, au sein du revêtement (4), la proportion x augmente progressivement avec l'augmentation de la distance au matériau métallique (3) ; ou **en ce que** le revêtement (4) comprend un mélange non stœchiométrique (1-y)M-yMOₓ ou (1-y)M-yMNₓ ou (1-y)M-yMCₓ, avec un gradient au sein du revêtement (4), et **en ce que**, au sein du revêtement (4), les proportions x et y augmentent progressivement avec l'augmentation de la distance au matériau métallique (3).

4. Diaphragme (2) pour séparer hermétiquement un premier espace (14) contenant un milieu fluide hydrogéné (13) d'un second espace (15) selon la revendication précédente ; **caractérisé en ce que** le revêtement (4) comprend un mélange non stœchiométrique (1-y)M-yMOₓ ou (1-y)M-yMNₓ ou (1-y)M-yMCₓ avec un gradient au sein du revêtement (4) ; et **en ce que**, à une distance de l'interface (19) entre le revêtement (4) et le matériau métallique (3), il existe une transition progressive du revêtement (4) à un mélange stœchiométrique de carbure, de nitrure ou d'oxyde.

5. Diaphragme (2) pour séparer hermétiquement un premier espace (14) contenant un milieu fluide hydrogéné (13) d'un second espace (15) selon l'une quelconque des revendications précédentes ; **caractérisé en ce que** le revêtement (4) est plus mince que l'épaisseur du matériau métallique (3) ou **en ce que** l'épaisseur du revêtement (4) ne dépasse pas 10 % de l'épaisseur du diaphragme (2).

6. Diaphragme (2) pour séparer hermétiquement un premier espace (14) contenant un milieu fluide hydrogéné (13) d'un second espace (15) selon l'une quelconque des revendications précédentes ; **caractérisé en ce que** le revêtement (4) a un coefficient de dilatation thermique ; **en ce que** le matériau métallique (3) a un coefficient de dilatation thermique ; **en ce que**, à une interface (19) entre le matériau métallique (3) et le revêtement (4), le coefficient de dilatation thermique du revêtement (4) ne diffère pas de plus de 50 % du coefficient de dilatation thermique du matériau métallique (3).

7. Diaphragme (2) pour séparer hermétiquement un premier espace (14) contenant un milieu fluide hydrogéné (13) d'un second espace (15) selon l'une quelconque des revendications précédentes ; **caractérisé en ce que** le diaphragme (2) comprend au moins un revêtement supplémentaire (4', 4", 4‴,...; **en ce que** ledit revêtement supplémentaire (4', 4", 4‴,...) est disposé du côté du revêtement (4) opposé au matériau métallique (3) ; et **en ce que** ledit revêtement supplémentaire (4', 4'', 4‴,...) comprend d'oxyde, de carbure ou de nitrure stœchiométriques.

8. Diaphragme (2) pour séparer hermétiquement un premier espace (14) contenant un milieu fluide hydrogéné (13) d'un second espace (15) selon la revendication précédente ; **caractérisé en ce que** le revêtement (4) a un coefficient de dilatation thermique ; **en ce que** le revêtement supplémentaire (4', 4", 4‴,...) a un coefficient de dilatation thermique ; **en ce que** le matériau métallique (3) a un coefficient de dilatation thermique ; et **en ce que** le coefficient de dilatation thermique du revêtement (4) est compris entre le coefficient de dilatation thermique du matériau métallique (3) et le coefficient de dilatation thermique du revêtement supplémentaire (4', 4", 4‴,...).

9. Diaphragme (2) pour séparer hermétiquement un premier espace (14) contenant un milieu fluide hydrogéné (13) d'un second espace (15) selon l'une quelconque des revendications précédentes, **caractérisé en ce que** le diaphragme (2) comprend une couche promotrice d'adhérence (5) qui empêche le décollement du revêtement (4) du matériau métallique (3) du diaphragme (2) ; **en ce que** ladite couche promotrice d'adhérence est disposée entre le matériau métallique (3) du diaphragme (2) et le revêtement (4) ; et **en ce que** la couche promotrice d'adhérence (5) comprend de l'aluminium ou des métaux de terres rares ou un métal réfractaire.

10. Diaphragme (2) pour séparer hermétiquement un premier espace (14) contenant un milieu fluide hydrogéné (13) d'un second espace (15) selon les revendications précédentes, **caractérisé en ce que** la couche promotrice d'adhérence présente une pureté d'au moins 75 % en poids ; ou **en ce que** la couche promotrice d'adhérence comprend au moins 90 % en poids de zirconium ou de tungstène.

11. Diaphragme (2) pour séparer hermétiquement un premier espace (14) contenant un milieu fluide hydrogéné (13) d'un second espace (15) selon l'une quelconque des revendications précédentes, **caractérisé en ce que** le diaphragme (2) comprend un revêtement interne (22) destiné à réduire la perméabilité à l'hydrogène moléculaire et/ou atomique, ledit revêtement interne (22) étant disposé du côté du matériau métallique (3) du diaphragme (2) qui est opposé au milieu fluide (13) dans le second espace (15).

12. Diaphragme (2) pour séparer hermétiquement un premier espace (14) contenant un milieu fluide hydrogéné (13) d'un second espace (15) selon l'une quelconque des revendications précédentes, **caractérisé en ce que** le revêtement interne (22) comprend un mélange de carbures non stœchiométriques (1-y)M-yMCₓ (avec 0 < x < x_{M,C} et 0 < y <= 1, où M=Si avec x_{Si,C}=1 ou M=Al avec x_{Al,C}=3/4 ou M=Ti avec x_{Ti,C}=1) ; ou **en ce que** le revêtement (4) comprend un mélange de nitrures non stœchiométriques (1-y)M-yMNₓ (avec 0 < x < X_{M,N} et 0 < y <= 1, où M=Al avec x_{Al,N}=1 ou M=Cr avec x_{Cr,N}=1 ou M=Si avec x_{Si,N}=4/3 ou M=Ti avec x_{Ti,N}=1) ; ou en de que le revêtement (4) comprend un mélange d'oxydes non stœchiométriques (1-y)M-yMOₓ (avec 0 < x < x_{M,O} et 0 < y <= 1 ; où M=Al avec x_{Al,O}=1,5 ou M= Cravec x_{Cr,O}=1,5 ou M=Si avec x_{Si,O}=2 ou M=Ti avec x_{Ti,O}=2 ou M=Zr avec x_{Zr,O}=2 ou M=terres rares avec X_{terres rares,O}= 1 à 2).

13. Diaphragme (2) pour séparer hermétiquement un premier espace (14) contenant un milieu fluide hydrogéné (13) d'un second espace (15) selon l'une quelconque des revendications précédentes, **caractérisé en ce que** le diaphragme (4) présente au moins partiellement une épaisseur inférieure à 500 µm.

14. Diaphragme (2) pour séparer hermétiquement un premier espace (14) contenant un milieu fluide hydrogéné (13) d'un second espace (15) selon l'une quelconque des revendications précédentes, **caractérisé en ce que** le matériau métallique (3) est un acier à grains fins présentant une structure martensitique, bainitique, ferritique aciculaire, ferritique avec figures de Widmannstätten ou un mélange de ces structures, ou encore de la martensite avec des précipités partiellement cohérents ou incohérents.

15. Transducteur (1) pour mesurer une pression d'un milieu fluide hydrogéné (13) ; dans lequel ledit transducteur (1) comprend une extrémité exposée à la pression (11) orientée vers le milieu fluide (13) ; ledit transducteur (1) comprenant un boîtier (7) ; ledit transducteur (1) comprenant un assemblage de mesure (16) ; **caractérisé en ce que** ledit transducteur (1) comprend un diaphragme (2) selon l'une quelconque des revendications précédentes.
